# EUROPEAN PATENT APPLICATION

(11) **EP 4 794 141 A1**
(43) Date of publication of application: **19.08.2026**
(21) Application number: 25169610.0
(22) Date of filing: 10.04.2025
(51) Int. Cl.: H02G 1/02, H02G 7/00

(54) **METHOD AND SYSTEM FOR FAULT CONDITION IDENTIFICATION ON A POWER TRANSMISSION LINE**

(30) Priority: 14.02.2025 IN 202541012852
(71) Applicant: Hitachi Energy Ltd, 8050 Zürich (CH)
(72) Inventor: KUMAR SAHA, Barun, 713212 Durgapur (IN); AMBAN PARAPURATH, Anoop, 560067 Bangalore (IN); NAIDU, Obbalareddi Demudu, 560087 Bangalore (IN)
(74) Representative: Vossius & Partner Patentanwälte Rechtsanwälte mbB

(57) **Abstract**

The present disclosure relates to a method for fault detection and fault localisation on a power transmission line. The method comprises obtaining a fault location of a fault on the power transmission line, obtaining, by an unmanned aerial vehicle (UAV), image and/or video and/or audio data of the fault at the fault location, and identifying, by analysing the image and/or video and/or audio data, a fault condition.

## Description

The present disclosure relates to a method and system for condition identification on a power transmission line. Moreover, the present disclosure relates to fault detection and fault localisation on a power transmission line.

Transmission lines may be subjected to faults due to storms, lightning, snow, freezing rain, insulation break-down, short circuits by birds, tree contact with a transmission line, and other external objects. Transient faults may be self-cleared by reclosing. In case of a permanent fault, however, the line is energised only after a maintenance crew identifies and replaces the damaged component. For this, precise fault position and characterisation of the fault should be available since otherwise, the identification task may become tedious and time consuming for high voltage long transmission lines spread overs hundreds of kilometres.

Generally, when a fault or disturbance occurs in a power grid, a disturbance record (DR) is generated. Often, precious time is wasted in visiting the fault location, investigating the fault, and deciding on how to repair the fault. Collectively, this potentially increases the maintenance time. Therefore, an efficient and automated approach to gather relevant information related to a fault and improve the situational awareness of the maintenance team is desirable.

This need is met with the features of the present disclosure.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a method for fault condition identification on a power transmission line. The method comprises obtaining a fault location of a fault on the power transmission line, obtaining, by an unmanned aerial vehicle (UAV), image and/or video and/or audio data of the fault at the fault location, and identifying, by analysing the image and/or video and/or audio data, a fault condition.

Various embodiments may preferably implement the following features.

Preferably, the method further comprises outputting a report including the fault location and the fault condition.

Preferably, the fault condition (or cause of fault) comprises at least one of fire, broken insulator, tree branch, ash cloud, broken cable, cable sheath failure, or no fault.

Preferably, the method further comprises obtaining weather data from the UAV and/or from a server and/or from a meteorological station, wherein the report is based on the weather data.

Preferably, the method further comprises obtaining information on required equipment to address the fault based on at least one of the fault location, the fault condition, or the weather data, wherein the report further includes the information on the required equipment.

Preferably, the report is generated by a large language model, LLM, a multimodal language model, MLM, or a small language model, SLM.

Preferably, the method further comprises obtaining disturbance data of the power transmission line, and detecting, based on the disturbance data, a fault. Preferably, the disturbance data comprises a disturbance record (DR) or COMTRADE file.

Preferably, the analysis of the image and/or video and/or audio data is performed by a fault identification algorithm.

Preferably, the fault identification algorithm is an Al-classifier, preferably a pre-trained Al classifier.

Preferably, the Al classifier is a machine learning, ML, or deep learning, DL, classifier, preferably deep neural network, DNN, convolutional neural network, CNN, large language model, LLM, Vision Transformer, or Vision Language Model.

Preferably, the analysis of the image and/or video data comprises an image segmentation to separate a background of the image and/or video from the power transmission line and/or a power transmission line equipment and/or pylons.

Preferably, the UAV autonomously travels along the power transmission line, more preferably based on a predefined travel path.

Preferably, the identification of the fault condition is performed on-board on the UAV, and/or on a processing device, and/or on a server.

The present disclosure further relates to a system comprising an unmanned aerial vehicle (UAV), the UAV comprising at least one sensor for obtaining image and/or video and/or audio data, and at least one processor configured to perform the method as described above.

Various embodiments may preferably implement the following features.

Preferably, the at least one processor is provided on the UAV and/or a server.

Preferably, the UAV comprises at least one of a temperature sensor, a global positioning system, GPS, sensor, a humidity sensor, a rain sensor, a gyroscope, or a microphone.

The present disclosure further relates to a non transitory computer-readable storage medium comprising instructions which, when executed by a processor, configure the processor to perform the method as outlined above.

The present disclosure further relates to a computer program product comprising instructions which, when executed by a processor, configure the processor to perform the method as described above.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.
Fig. 1 is a flow chart of an embodiment according to the present disclosure.
Fig. 2 shows a schematic diagram of a retrieval augmented generation (RAG) system according to an embodiment of the present disclosure.
Fig. 3 is a flow chart of an embodiment according to the present disclosure.
Fig. 4 is a depiction of a search scenario according to an embodiment of the present disclosure.

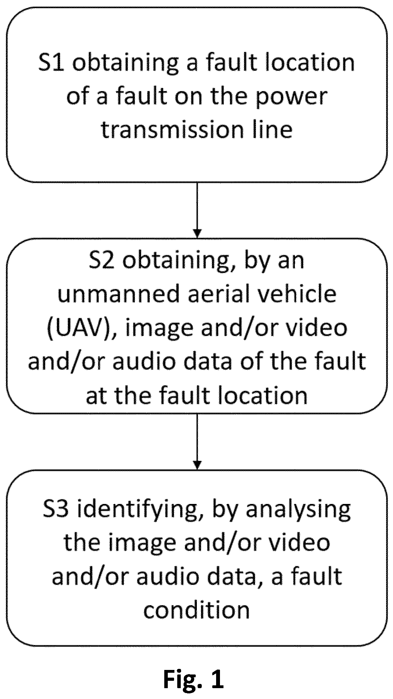

The present disclosure relates to a method for fault condition identification on a power transmission line. According to an embodiment shown in Fig. 1, the method comprises obtaining S1 a fault location of a fault on the power transmission line, obtaining S2, by an unmanned aerial vehicle (UAV), image and/or video and/or audio data of the fault at the fault location, and identifying S3, by analysing the image and/or video and/or audio data, a fault condition.

The method may also comprise fault detection and fault localisation.

As used herein, the term fault condition may refer to a cause of the fault.

In an embodiment, the method further comprises outputting a report including the fault location and the fault condition. The fault condition (i.e., the cause of the fault) may comprise at least one of fire, broken insulator, tree branch, ash cloud, broken cable, cable sheath failure, or no fault. Moreover, weather data may be obtained from the UAV, e.g., via suitable sensors provided on the UAV. Such sensors may comprise, e.g., a temperature sensor, a humidity sensor, a GPS sensor, a rain sensor, a luminance detector (photodetector), or a wind detector.

Alternatively or in addition, weather data may be obtained from a server and/or from a meteorological station. The report may be based on the weather data.

The method may further comprise obtaining information on required equipment to address the fault based on at least one of the fault location, the fault condition, or the weather data. The information on the required equipment may also be included in the report.

The report may be generated by a large language model, LLM, a multimodal language model, MLM, or a small language model, SLM.

In addition or as an alternative, the report may be output as a simple text file (e.g., having the output temperature, fault condition, location, etc.).

The method may further comprise obtaining disturbance data of the power transmission line. Based on that disturbance data, the presence of a fault may be detected. The disturbance data may comprise a disturbance record (DR) or IEEE COMTRADE file.

The analysis of the image and/or video and/or audio data is performed by a fault identification algorithm such as, e.g., an Al-classifier, preferably a pre-trained Al classifier.

The Al classifier may be a machine learning (ML) or deep learning (DL) classifier (deep neural network (DNN), convolutional neural network (CNN), large language model (LLM), Vision Transformer, or Vision Language Model).

The analysis of the image and/or video data may comprise an image segmentation. Thereby, a background of the image and/or video may be separated from the power transmission line and/or a power transmission line equipment and/or pylons. This may improve fault detection since parts of the image not relevant to the fault assessment are masked or removed.

For reaching the fault location and during the fault identification process, the UAV may travel, in particular autonomously, along the power transmission line. It may also travel based on a predefined travel path.

The identification of the fault condition may be performed on-board on the UAV, which may have advantages regarding the processing speed, a processing device, or on a server.

An embodiment of the present disclosure further relates to a system comprising an unmanned aerial vehicle (UAV), the UAV comprising at least one sensor for obtaining image and/or video and/or audio data, and at least one processor configured to perform the method as described above.

The at least one processor may be provided on the UAV and/or a server. The UAV may comprise at least one of a temperature sensor, a global positioning system, GPS, sensor, a humidity sensor, a rain sensor, a gyroscope, or a microphone.

An embodiment of the present disclosure further relates to a non-transitory computer-readable storage medium comprising instructions which, when executed by a processor, configure the processor to perform the method as outlined above.

An embodiment of the present disclosure further relates to a computer program product comprising instructions which, when executed by a processor, configure the processor to perform the method as described above.

The present disclosure will be further described in more detail below.

In an embodiment, after a DR becomes available and a fault location is determined, a UAV visits the precise location of the fault. The UAV, on reaching the location, approaches the pylon (e.g., a transmission tower) at a safe distance (which may be a predefined distance). The UAV captures audio-visual state of the pylon, for example, images and video, for analysis. The state may be captured from various positions/angles, such top-view and side-view. The audio-visual state may capture the condition of the concerned pylon as well as the cables connected to the pylon. The safe distance as well as the capturing positions may vary depending on the type of the fault location to be visited.

Next, the UAV may run an on-board fault detection algorithm to identify the physical nature of the fault (fault condition) or the lack of a fault in the concerned pylon's location. The present disclosure is not limited to pylons and may be applied to any structure of a power grid, where faults may be present. This fault detection algorithm can be a pre-trained Al classifier, which identifies the nature of a fault based on one or more images. As noted above, the algorithm may also be executed on an external processing device and/or a server. In the following, a UAV executing the fault condition identification is assumed for exemplary purposes.

A fault may be found on a pylon, on a cable, both, or none. The fault conditions on a pylon may comprise, e.g., fire, broken insulator, tree branch, ash cloud, or no fault. Further, cable fault conditions may comprise, e.g., broken cable, cable sheath failure, ash cloud, or no fault.

When the UAV identifies a fault at a location, it may collate all relevant data, such as image, DR data, and analysis result, together. In the following, this may be denoted as the report. In addition, it may consider meteorological data, such as humidity and rainfall, collected by on-board sensors of the UAV.

A situational awareness reporting application running on the UAV (or the server) using an on-board LLM/SLM (henceforth, LLM) available on the UAV is presented with such data. The reporting application/LLM may also be presented with a predefined set of instructions written in natural language (or prompt), such as English. A prebuilt database of appropriately indexed relevant content, such as product manuals and Standard Operation Procedures, is also available on the UAV. The reporting application uses the LLM to retrieve any relevant information pertaining to the identified fault, such as how to repair the fault and what precautions to take. Additional data, such as current weather status, may also be used in this regard. The LLM may use the UAV's on-board processing unit such as a graphics processing unit (GPU) to generate text based on the prompt and input context provided.

Next, the UAV may fetch the current location of all the available field personnel. The UAV sends the report to the nearest field personnel via the Internet (or a Wireless Mesh Network, if available). Alternatively, the UAV can upload the report to an application server running the cloud. In that case, said application may relay the report to the field personnel.

A visual fault detection algorithm can be a pre-trained Machine Learning (ML) or Deep Learning (DL) classifier (henceforth, Al classifier). The Al classifier may be trained from scratch using relevant images from a power grid transmission system, indicating both normal and fault scenarios. Traditional ML classification approaches, such as Support Vector machines and Decision Trees, may be used for this purpose. Alternatively, the Al classifier could be a Deep Neural Network (DNN), such as a Convolutional Neural Network (CNN), trained from scratch. Alternatively, the Al classifier could be a well-known vision model architecture known in the SOTA, such as ImageNet and InceptionNet, whereby such a vision model is used as it, fine-tuned with an additional set of images, or used the features generated by the vision model to separately train a classifier. Alternatively, the Al classifier can be based on a Vision Transformer architecture. Alternatively, the Al classifier could be a Vision Language Model, such as PaliGemma, accompanied by one or more descriptive/prescriptive prompts in natural language to identify faults from an image.

The visual fault detection Al classifier may be used to infer, i.e., detect, the fault condition (fault type), by using a single image, multiple images combined together, or sequentially one-by-one from a set of multiple images.

As another alternative, the Al classifier may be a DNN trained to classify videos.

In the following, prompt examples are given which may be used according to the present disclosure.

You are provided with the data and images. Carefully consider them.

The content of the COMTRADE DR configuration (.cfg) file is provided in <CFG FILE> in the <DATA> section. The <DAT FILE> has a subset of sample values from the . dat file around the trigger sample. The supplied images are described in the <IMAGES> section.

```
<DATA>
       <CFG FILE>
       {cfg_content}
       </CFG FILE>
       <DAT FILE>
       {dat_content}
       </DAT FILE>
       <SAMPLING RATE>
       {sampling_rate} samples per second
       </SAMPLING RATE>
       </DATA>
       <IMAGES>
       <IMAGE 1>
```

Description: The image shows a zoomed-in view of a few samples of the three-phase current waveforms around the trigger instance (indicated by a dark vertical line). The legend at the left-bottom corner indicates which waveform is of what. Specifically, the current waveforms corresponding to phase (line) A, B, and C, respectively, are drawn using red, green, and blue colors, with 65% transparency.

The x- and y-axes, respectively, indicate time (in seconds) and amplitude (in Amperes). The major and minor grids of both the x- and y-axes are depicted and labeled. The x-axis labels are rotated by 90 degrees.

```
</IMAGE 1>
       <IMAGE 2>
```

Description: The image shows a zoomed-in view of a few samples of the three-phase voltage waveforms around the trigger instance (indicated by a dark vertical line). The legend at the left-bottom corner indicates which waveform is of what. Specifically, the voltage waveforms corresponding to phase (line) A, B, and C, respectively, are drawn using cyan, magenta, and yellow colors, with 65% transparency.

The x- and y-axes, respectively, indicate time (in seconds) and amplitude (in Volts). The major and minor grids of both the x- and y-axes are depicted and labeled.

```
</IMAGE 2>
       </IMAGES>
       <INSTRUCTIONS>
```

Answer the questions given below accurately, based on the data and images provided.

The fault type, a CRITICAL requirement, must be identified using <IMAGE 1> and <IMAGE 2> only.
1. Carefully examine the voltage and current waveforms.
2. Identify the current phases showing SIGNIFICANT rise in the amplitudes.
3. Identify the voltage phases showing fall in amplitudes.
4. A fault may involve ONE, MULTIPLE, or ALL the phases.

Remember, fault type identification MUST be done very accurately!

Describe your step-by-step thought process to explain the detailed reasoning behind your answer. At the end, indicate your level of confidence for the answer generated based on a scale between 0 and 100.

```
</INSTRUCTIONS>
       <QUESTIONS>
       - What is the type of the fault?
       </QUESTIONS>
       Answer:
       - **What is the type of the fault?**
```

Based on <IMAGE 1> and <IMAGE 2>, we can observe the following:
- The current in phase C (blue) shows a significant rise in amplitude.
- The voltages in phases A and B appear to drop, with phase B experiencing a more significant drop.

These observations suggest a **phase-to-ground fault** involving phase C.

- **What is the fault inception?**

Examining the <DAT FILE>, we can see that the current in phase C starts to rise abnormally at sample number **995**.

Converting this sample number to time, we get 995 / 1000 = **0.995 seconds**.

- **What is the max fault current?**

From <IMAGE 1>, the highest peak of the fault current in phase C is approximately **3800 A**.
Confidence level: 90%

The analysis relies on visual interpretation of the provided images, which might introduce minor inaccuracies in estimating values like fault current and clearance time. However, the overall reasoning and conclusions drawn are well-supported by the data and exhibit a high degree of confidence.

The above presents a typical example of prompting an LLM with relevant instructions. The prompt template variables, e.g., {cfg_content}, are replaced at run-time with appropriate content. In particular, said prompt is a prompt for a Multimodal Language Model (MLM), where the contents of a DR configuration file, the images of one or more waveforms, and relevant instructions are included. The aforementioned prompt can be used to identify the fault type, for example, a single-line-to-ground fault in Phase C. In addition, said prompt can also be used to answer some queries related to the IED configuration, based on the contents of the DR configuration file. It may be noted that this particular prompt is merely an example of prompting LLMs to solve power grids-related problems. Other appropriate/alternative prompts can be constructed to address other relevant problems as well. For example, in some cases, the (fault diagnosis) prompt to an LLM may contain text, data, and/or summary information based on raw data, without any multimodal data. That is, pre-computed results may be provided and the LLM may subsequently be utilised to generate a human-readable report.

Below is an exemplary prompt for an LLM.

You are an assistant for question-answering tasks related to fault analysis in power grids.

Use the following pieces of retrieved context to answer the question.

```
### Question
       {question}
       ### Context
       {answer}
       ### Answer
```

This presents a typical example of prompting an LLM to respond to a query based on the available context using the Retrieval-Augmented Generation (RAG) paradigm. Further, the example below illustrates this scenario with some hypothetical data provided as context.
You are an assistant for question-answering tasks related to fault analysis in power grids.
Use the following pieces of retrieved context to answer the question.

### Question
   What safety precautions are to be taken by crew addressing a broken cable electrical fault? The current weather condition is heavy rain.
### Context
   Heavy rainfall can cause landslides. Expect a traffic jam and plan your travel accordingly.
   Do not go outside if not necessary. Be careful if you are travelling - - loose cables may lead to electrocution.
   Follow the weather reports regularly.
   <additional context retrieved from other relevant data sources goes here... >
### Answer
   Given that there is a heavy rainfall at the concerned site, the maintenance crew should be extra careful.
   - Plan the maintenance based on your local weather and traffic situation.
   - Be equipped with appropriate protective gear, such as raincoats and insulated gloves.
   - Look out for any power cables hanging overhead or submerged.
   - You may have a limited visibility. Pack a few portable light sources.

In practice, the context is retrieved from relevant offline and/or online data sources. The file also shows a hypothetical answer generated in response to the query based on the data. It may be noted that this is merely an example of a simple scenario involving RAG. Other appropriate prompts can be constructed to address other relevant problems, based on contextual data, as well.

It may be noted that the prompts (or instructions) depicted here are merely for illustrative purposes. In practice, one may have less, more, or different instructions in a prompt, based on the problem, LLM, and data used.

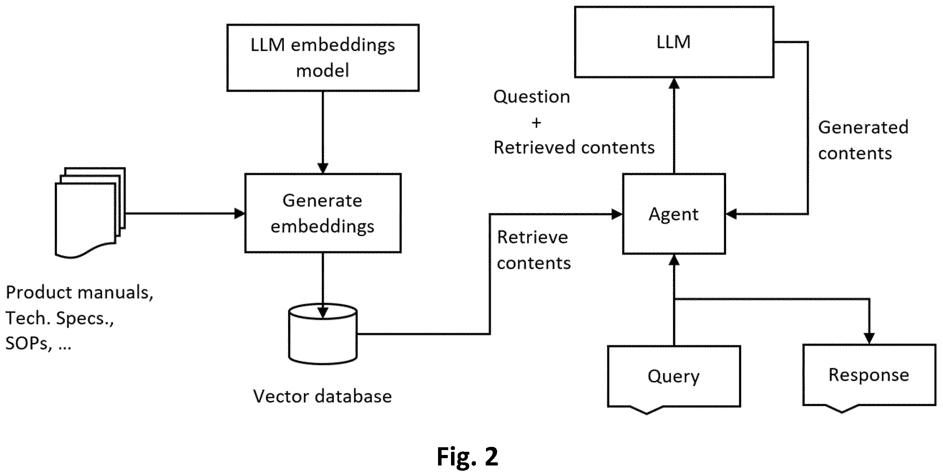

Fig. 2 exemplarily illustrates the working principle of a typical RAG-based solution. As the first step, embeddings for relevant data are generated using an embeddings model. These embeddings-higher dimensional vectors-are stored in a vector database. In the context of this disclosure, relevant data may include, but not be limited to, product manuals, frequently asked questions, and Standard Operating Procedures (SOPs). Subsequently, when a query is submitted to the Al application or agent, the query is converted into an embeddings vector using the same embeddings model. At this point, content relevant to the query (or its embeddings) are retrieved from the vector database. Every vector database provides a mechanism for this, for example, using an Approximate nearest neighbor (ANN) search algorithm [ANN-citation]. The retrieved contents, along with the original query, are sent to an LLM. The LLM generates a response based on these available contents. The agent returns the LLM's response to the user.

Thus, in this disclosure, an identification of the nature of a fault by sending a UAV is provided. The UAV may be equipped with relevant sensors, necessary data, algorithms, as well as communication interfaces. The UAV, at the precise location of the fault, may capture images of a tower and its surrounding area. These data may then be processed using an on-board fault identification (classification) algorithm or processed on a (cloud) server.

When the UAV identifies a fault, it may send all relevant information, including the images, to an application running on-board (or on a server) and using an LLM or other machine learning model. The LLM-powered application may generate a situational awareness report, detailing the nature of the fault, potential troubleshooting steps, and safety measures, among others. The UAV may also identify field personnel located nearest to the fault. Hence, the UAV may relay the situational awareness report of the fault to the nearest field personnel, who can address the fault.

According to the present disclosure, the determination of the fault condition (i.e., the cause of the fault or fault type) may be efficiently and reliably detected. This leads to reduced time and effort in repairing fault. Further, the present disclosure ensures that the maintenance crew arrives properly equipped depending on the current weather conditions, the location, and the fault condition, which also avoids unnecessary trips due to the wrong equipment. Further, a reduced primary response time to a fault can be ensured and thus a reduced downtime of the power line.

For fault condition determination, no human supervision or interaction is necessary. The presented method is energy efficient and ensures privacy of the grid operator by providing the possibility of performing the fault identification on-board.

The present disclosure further relates to a method for fault localisation on a power transmission line.

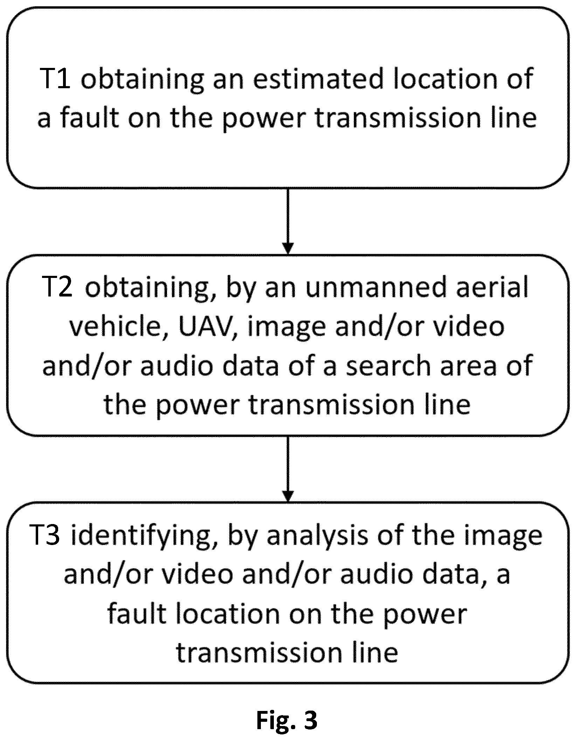

Fig. 3 shows an exemplary flow chart according to an embodiment of the present disclosure. In particular, Fig. 3 shows a method for fault localisation on a power transmission line comprising obtaining T1 an estimated location of a fault on the power transmission line, obtaining T2, by an unmanned aerial vehicle (UAV) image and/or video and/or audio data of a search area of the power transmission line, wherein the search area includes the estimated fault location and identifying T3, by analysis of the image and/or video and/or audio data, a fault location on the power transmission line.

Step T1 may also comprise obtaining, in addition to the estimated fault location, a search area. The search area may be set according to the estimated fault location (e.g., depending on its topology), or may comprise a predetermined area (e.g., a radius) around the estimated fault location.

In an embodiment, the method further comprises obtaining disturbance data of the power transmission line; and obtaining, based on the disturbance data, the estimated location of the fault. Preferably, the estimated location of the fault and/or the search area is obtained from an external source.

In an embodiment, the analysis of the image and/or video and/or audio data is performed by a fault identification algorithm.

In an embodiment, the fault identification algorithm is an Al-classifier or may be a pre-trained AI classifier.

In an embodiment, the Al classifier is a machine learning, ML, or deep learning, DL, classifier, preferably deep neural network, DNN, convolutional neural network, CNN, large language model, LLM, Vision Transformer, or Vision Language Model.

In an embodiment, the analysis of the image and/or video data comprises an image segmentation to separate a background of the image and/or video from the power transmission line and/or a power transmission line equipment and/or pylons.

In an embodiment, the disturbance data comprises at least one disturbance record, DR, and/or IEEE COMTRADE file.

In an embodiment, the UAV autonomously travels along the power transmission line. Preferably, the UAV travels to the estimated fault location based on a predefined travel path. Preferably, the UAV autonomously travels in the search area.

In an embodiment, the identification of the fault location is performed on-board on the UAV, and/or on a processing device and/or on a server.

In an embodiment, the method further comprises transmitting the fault location to an external device, preferably to an external device of a maintenance crew and/or service personnel.

The present disclosure further relates to a corresponding method for asset management using the method as outlined above.

The present disclosure further relates to a system comprising an unmanned aerial vehicle, UAV, the UAV comprising at least one sensor for obtaining image and/or video and/or audio data; and at least one processor configured to perform the method as described above.

The at least one processor may be provided on the UAV and/or a server.

The present disclosure further relates to a non-transitory computer-readable storage medium comprising instructions which, when executed by a processor, configure the processor to perform the method as outlined above.

The present disclosure further relates to a computer program product comprising instructions which, when executed by a processor, configure the processor to perform the method as described above.

According to an embodiment of the present disclosure, the identification of a fault's location is performed by sending a UAV. Thereby, an accurate fault location can be found quickly and efficiently. The UAV may be equipped with relevant sensors (camera, microphone, GPS, gyroscope, etc.), necessary data and algorithms, as well as communication interfaces. An exemplary search may be conducted as follows. The UAV is sent to an initial, estimated fault location. The fault location may be estimated based on, e.g., a disturbance record (DR), a fault location algorithm, or grid data. The estimated fault location may be automatically determined or may be obtained from an external source. Starting from that estimated point, the UAV autonomously navigates the area, investigating the power transmission line, e.g., a sequence of towers one by one, until a fault is identified or the search range is exceeded. In particular, the UAV captures images/video/audio of a tower (e.g. a transmission tower) and its surrounding area. The present disclosure is not limited to (transmission) towers and may be applied to any structure of a power grid, where faults may be present. This data is processed using a fault identification (classification) algorithm. The identification may be performed on-board or on a (cloud) server. If no fault condition is detected, the UAV moves to the next tower for inspection.

In an embodiment, the UAV can travel to the estimated fault location using a pre-computed/pre-defined path. Further, the UAV may autonomously navigate the search area by computing the waypoints based on its current location. In other words, these waypoints are not pre-computed but rather generated on the spot. The UAV may also travel the search area in a randomised manner.

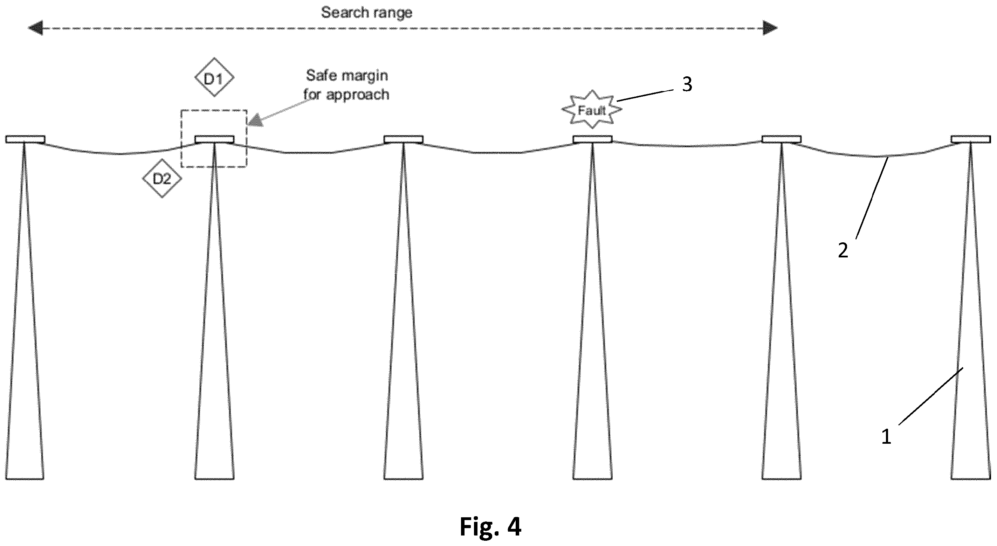

An exemplary search procedure is depicted in Fig. 4 showing a power transmission line 2 supported by a plurality of pylons 1 or (transmission) towers. The fault 3 is indicated by a star-shaped block. The search range is indicated by a dashed line and comprises, in that example, five pylons 1. Moreover, each pylon 1 may have a safety margin for approach (see dashed box) which restricts a proximity of the UAV with respect to the pylon 1. I.e., the UAV may not come closer to the pylon 1. The safety margin may be pre-set. The safety margin may be generally pre-set, pre-set for all pylons 1 or pre-set for particular elements of a power transmission line or a grid.

Thus, the UAV, on reaching the estimated fault location, approaches the pylon 1 at a safe distance. The UAV captures an audio-visual state of the pylon 1, for example, images and video, for analysis. The state may be captured from different positions, such as a top-view and/or a side-view. In Fig. 4, the blocks D1 and D2 indicate different approaching positions or angles from which the UAV obtains the image/video/audio data. The audio-visual state may capture the condition of the concerned pylon as well as the cables connected to the pylon.

Once the pylon's 1 state is captured, the UAV runs an on-board visual fault identification algorithm to identify the physical nature of the fault or to determine that no fault is present at the current location. This visual fault identification algorithm can be a pre-trained Al classifier, which identifies the nature of a fault based on one or more images. The identification may also be performed externally on a (cloud) server, or a computing device. A fault may be found on a pylon, on a cable, both, or none. In case no fault is found at the current location, the UAV computes the next location (GPS coordinates) to visit, based on its current location.

When the UAV identifies a fault at a location, it collates all relevant data, such as image, DR data, and analysis result, together (e.g., as a report). Next, the UAV may obtain current locations of available field personnel. Subsequently the UAV sends the report to the nearest field personnel via the Internet (or possibly a Wireless Mesh Network, if available). Alternatively, the UAV can upload the report to an application server running on the cloud or a central server. In that case, said application may relay the report to the field personnel.

The data may also be sent directly to a maintenance crew.

Possible fault cases may be one of a pylon fault such as a fire, broken insulator, tree branch, ash cloud or no fault. Further, the fault cases may be one of a cable fault such as a broken cable, a cable joint failure, a fire or no fault.

A visual fault identification algorithm can be a pre-trained Machine Learning (ML) or Deep Learning (DL) classifier (in the following also denoted as Al classifier). The Al classifier may be trained from scratch using relevant images from a power grid transmission system, indicating both normal and fault scenarios. Traditional ML classification approaches, such as Support Vector Machines and Decision Trees, may be used for this purpose. Alternatively, the Al classifier could be a Deep Neural Network (DNN), such as a Convolutional Neural Network (CNN), trained from scratch. Alternatively, the Al classifier could be a vision model architecture known in the prior art, such as ImageNet and MobileNet, whereby such a vision model is used as it is, fine-tuned with an additional set of images, or the features generated by the vision model are used to separately train a classifier. Alternatively, the Al classifier can be based on a Vision Transformer architecture. Alternatively, the Al classifier could be a Vision Language Model, such as PaliGemma, accompanied by one or more descriptive/prescriptive prompts in natural language to identify faults from an image.

The visual fault identification AI classifier may infer, i.e., detect, the fault condition (fault type), by using a single image, multiple images combined together, or sequentially one-by-one from a set of multiple images. The Al classifier may also be a DNN trained to classify videos. The Al classifier may be a multi-class classifier so that multiple, concurrent faults, if any, at any location may be identified.

In the following, an exemplary design of an Al classifier to identify the physical nature/cause of a fault based on their images using MobileNet [see, e.g., Andrew G. Howard et al., "MobileNets: Efficient Convolutional Neural Networks for Mobile Vision Applications", 17 April 2017] is described. This example, however, is not to be understood as limiting. That is, the description is merely an example of realising the fault classification. In practice, different CNN models (such as ImageNet) and/or input modalities (such as video and audio) may also be used.

MobileNet is a DNN consisting of 28 layers, including its depth-wise and point-wise convolution layers. The final layer is a softmax layer with 1000 classification heads. MobileNet can run efficiently on mobile and embedded devices, where the computational capacity is constrained.

A set images of pylons and cables collected by UAVs from different angles and depth under different fault scenarios as well as no-fault scenarios is considered for training. These images primarily capture a view of the pylons and cables attached to it, possibly with some of their surroundings. In addition, relevant transformations, such as rotation, may be applied to one or more images to generate new images and augment the original dataset. Each image file in the dataset may be manually annotated with its fault condition(s)/fault type(s) (alternatively, labels). Since this is a multiclass, multilabel classification problem, a data point may have multiple labels, for example, broken cable and pylon fire.

In particular, an image is fed to MobileNet and the output of its penultimate layer-which generates a feature vector-is considered. Subsequently, Principal Component Analysis (PCA) is performed in order to reduce the dimension of the feature vector. Finally, the dimensionality-reduced feature vector is normalised. The process is repeated for all the images in the dataset. These features are stored in a database for future use.

Subsequently, an Extreme Gradient Boosting (XGBoost) classifier is trained based on the extracted features and the corresponding labels. The classifier so trained, along with MobileNet, is deployed on the UAVs.

During inference time on any UAV, one or more images of the pylons and cables taken by the UAVs are considered. These images are fed to MobileNet to extract the relevant features. These are compressed using PCA and then normalised. In an example, it is considered that n such images are used to run inference, where n is an odd number. A majority voting is used to identify the target label(s) based on the label(s) identified for each label. In case two labels lead to a tie, both the labels are retained and reported.

It may be noted that XGBoost is merely used as an example here. One may replace it with any other suitable classification algorithm.

As noted above, in case the on-board image processing algorithms result in a classification accuracy below a pre-defined threshold, the UAV may upload the relevant audio-visual data to the cloud or central server. Then, a stronger Al classifier running on the cloud runs the classification algorithm on the input images, possibly of higher resolution, and communicates the results back to the UAV.

According to the present disclosure, an efficient and fast determination of an exact fault location is provided. That is, the disclosure provides for reduced time and effort in finding a fault's accurate location. This also reduces the time for primary response time to a fault and increases safety.

Moreover, the downtime of power line may be minimised. Further, the present disclosure may lead to a reduced penalty, which is based on the duration of a fault/blackout.

For fault location determination, no human supervision or interaction is necessary. The presented method is energy efficient and ensures privacy of the grid operator by providing the possibility of performing the fault identification on-board.

Unless explicitly indicated otherwise, all embodiments disclosed herein are compatible with each other, e.g. the method for fault condition identification on a power transmission line (Figs. 1 and 2) may be combined with the method for fault localisation on a power transmission line (Figs. 3 and 4).

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Method for fault condition identification on a power transmission line, the method comprising:
obtaining (S1) a fault location of a fault on the power transmission line;
obtaining (S2), by an unmanned aerial vehicle, UAV, image and/or video and/or audio data of the fault at the fault location; and
identifying (S3), by analysing the image and/or video and/or audio data, a fault condition.

2. Method according to claim 1, further comprising outputting a report including the fault location and the fault condition.

3. Method according to claim 1 or 2, wherein the fault condition comprises at least one of fire, broken insulator, tree branch, ash cloud, broken cable, cable sheath failure, or no fault.

4. Method according to claim 2 or 3, wherein the method further comprises obtaining weather data from the UAV and/or from a server and/or from a meteorological station, wherein the report is based on the weather data.

5. Method according to any one of claims 2 to 4, further comprising:
obtaining information on required equipment to address the fault based on at least one of the fault location, the fault condition, or the weather data, wherein the report further includes the information on the required equipment, and
wherein preferably, the report is generated by a large language model, LLM, a multimodal language model, MLM, or a small language model, SLM.

6. Method according to any one of claims 1 to 5, wherein the method further comprises:
obtaining disturbance data of the power transmission line; and
detecting, based on the disturbance data, a fault;
wherein preferably, the disturbance data comprises a disturbance record, DR, or COMTRADE file.

7. Method according to any one of claims 1 to 6, wherein the analysis of the image and/or video and/or audio data is performed by a fault identification algorithm.

8. Method according to claim 7, wherein the fault identification algorithm is an Al-classifier, preferably a pre-trained Al classifier; and
wherein preferably, the Al classifier is a machine learning, ML, or deep learning, DL, classifier, preferably deep neural network, DNN, convolutional neural network, CNN, large language model, LLM, Vision Transformer, or Vision Language Model.

9. Method according to any one of claims 1 to 8, wherein the analysis of the image and/or video data comprises an image segmentation to separate a background of the image and/or video from the power transmission line and/or a power transmission line equipment and/or pylons;
wherein preferably, the UAV autonomously travels along the power transmission line, more preferably based on a predefined travel path.

10. Method according to any one of claims 1 to 9, wherein the identification of the fault condition is performed on-board on the UAV, and/or on a processing device, and/or on a server.

11. System comprising:
an unmanned aerial vehicle, UAV, the UAV comprising at least one sensor for obtaining image and/or video and/or audio data; and
at least one processor configured to perform the method according to any one of claims 1 to 10.

12. System according to claim 11, wherein the at least one processor is provided on the UAV and/or a server.

13. System according to any one of claims 11 or 12, wherein the UAV comprises at least one of a temperature sensor, a global positioning system, GPS, sensor, a humidity sensor, a rain sensor, a gyroscope, or a microphone.

14. Non transitory computer-readable storage medium comprising instructions which, when executed by a processor, configure the processor to perform the method according to any one of claims 1 to 10.

15. Computer program product comprising instructions which, when executed by a processor, configure the processor to perform the method according to any one of claims 1 to 10.
